# EUROPÄISCHE PATENTSCHRIFT

(11) **EP 1 683 683 B1**
(45) Veröffentlichungstag und Bekanntmachung des Hinweises auf die Patenterteilung: **15.08.2007**
(21) Anmeldenummer: 05001438.0
(22) Anmeldetag: 25.01.2005
(51) Int. Cl.: B60R 21/0132

(54) **Verfahren zum Beurteilen einer Bewegung eines Kraftfahrzeugs**
Method for evaluation of a movement of a vehicle
Procédé pour l'évaluation d'un mouvement d'un véhicule automobile

(43) Veröffentlichungstag der Anmeldung: 26.07.2006
(73) Patentinhaber: Delphi Technologies, Inc., Troy, MI 48007 (US)
(72) Erfinder: Darvish, Abtin, 42119 Wuppertal (DE)
(74) Vertreter: Manitz, Finsterwald & Partner GbR

(56) Entgegenhaltungen:
- EP-A- 1 293 391
- DE-A1- 10 016 156
- DE-A1- 10 308 652
- DE-C1- 19 619 414
- US-A1- 2002 173 882
- US-A1- 2004 199 317

## Beschreibung

Die Erfindung betrifft ein Verfahren zum Beurteilen einer Roll- oder Überschlagbewegung eines Kraftfahrzeugs, insbesondere einer die Sicherheit von Fahrzeuginsassen beeinflussenden Roll- oder Überschlagbewegung.

Ein derartiges Verfahren ist grundsätzlich bekannt. Es wird beispielsweise zur Erkennung von gefährlichen Roll- oder Überschlagbewegungen des Kraftfahrzeugs eingesetzt, um ggf. geeignete Sicherheitsmaßnahmen einleiten zu können, z.B. die Straffung von Sicherheitsgurten, die Auslösung von Airbags und/oder das Ausfahren eines Überrollbügels oder einer verstärkten Nackenstütze.

Zur Ermittlung der Roll- oder Überschlagbewegung werden üblicherweise die Winkelgeschwindigkeit des Fahrzeugs um seine Längsachse sowie die laterale und vertikale Beschleunigung des Fahrzeugs gemessen. Der Roll- bzw. Rotationswinkel des Fahrzeugs wird durch eine numerische Integration der Rollrate bzw. Winkelgeschwindigkeit ermittelt und ggf. durch die gemessenen Beschleunigungswerte in lateraler oder vertikaler Richtung korrigiert.

Typische Roll- oder Überschlagbewegungen, wie beispielsweise eine Rollbewegung eines Kraftfahrzeugs über eine Leitplanke oder eine Böschung hinab, laufen vergleichsweise langsam ab. Üblicherweise erhöht sich der Rollwinkel des Kraftfahrzeugs in solchen Fällen in etwa 1 bis 2 Sekunden von 0° auf 90°, d.h. das Fahrzeug kippt in ein 1 bis 2 Sekunden aus seiner normalen Straßenlage auf die Seite. Da bei einer derartigen langsamen Rollbewegung ein vergleichsweise geringes Risiko von Kopfverletzungen der Fahrzeuginsassen besteht, ist eine Detektionszeit von etwa 600 bis 700 ms, die einem Rollwinkel von etwa 30° bis 40° entspricht, ausreichend, um beispielsweise einen Überrollbügel oder Airbag zu aktivieren.

Als problematisch erweisen sich jedoch schnellere Roll- oder Überschlagbewegungen, wie sie bei Sandeinzug, d.h. bei einem zumindest teilweisen Abkommen des Fahrzeugs von einer befestigten Fahrbahn, oder bei einem Kontakt des Fahrzeugs mit einer Bordsteinkante vorkommen können. Zur wirksamen Vermeidung von Verletzungen der Fahrzeuginsassen ist in solchen Fällen eine zuverlässige Detektion der Rotationsbewegung bereits bei einer Verkippung des Fahrzeugs um weniger als 10° wünschenswert. Dies erfordert eine schnelle Detektion der Roll- oder Überschlagbewegung im Bereich von unter 300 ms.

Zur Erreichung einer derartigen schnellen Detektionszeit lässt sich bei dem voranstehend beschrieben bekannten Verfahren jedoch die Detektionszeit von 600 ms bis 700 ms nicht ohne weiteres auf unter 300 ms reduzieren, da eine derartige Maßnahme die Empfindlichkeit des Verfahrens so stark erhöhen würde, dass auch solche Rotationsbewegungen des Fahrzeugs als Roll- oder Überschlagbewegungen erkannt würden, die in Wirklichkeit gar keine Roll- oder Überschlagbewegungen sind.

Der Grund hierfür ist, dass sich die Rotationsparameter, wie beispielsweise der Rollwinkel oder die Winkelgeschwindigkeit, einer Kippbewegung eines Fahrzeugs, die nicht zu einem Überschlag führt, im Verlauf der ersten 250 ms bis 350 ms von denen einer Kippbewegung, die letztlich in einem Überschlag des Fahrzeugs endet, nicht wesentlich unterscheiden.

Sicherheitsmaßnahmen könnten unter Umständen also unnötig eingeleitet werden.

Ein Verfahren gemäß dem Oberbegriff des Anspruchs 1 ist aus der US-A-2002/0173882 bekannt. Auch die US-A-2004/0199317 offenbart ein solches Verfahren.

Der Erfindung liegt die Aufgabe zugrunde, ein Verfahren zum Beurteilen einer Roll- oder Überschlagbewegung eines Kraftfahrzeugs zu schaffen, welches zu einer erhöhten Sicherheit von Fahrzeuginsassen führt.

Zur Lösung der Aufgabe ist ein Verfahren mit den Merkmalen des Anspruchs 1 vorgesehen.

Bei dem erfindungsgemäßen Verfahren zum Beurteilen einer Roll- oder Überschlagbewegung eines Kraftfahrzeugs, insbesondere einer die Sicherheit von Fahrzeuginsassen beeinflussenden Roll- oder Überschlagbewegung, wird die Beschleunigung des Fahrzeugs in wenigstens einer linearen Richtung, insbesondere in Richtung einer Fahrzeugachse, mehrfach gemessen, die zeitliche Änderung der Fahrzeugbeschleunigung in der mindestens einen linearen Richtung ermittelt und die ermittelte zeitliche Änderung der Fahrzeugbeschleunigung in der wenigstens einen linearen Richtung bei der Beurteilung der Roll- oder Überschlagbewegung berücksichtigt.

Der Erfindung liegt der allgemeine Gedanke zugrunde, die zeitliche Änderung der Fahrzeugbeschleunigung, d.h. also einen Ruck des Fahrzeugs, in wenigstens einer linearen Richtung zu detektieren und die Stärke des Fahrzeugrucks zur Einschätzung der Gefährlichkeit der Roll- oder Überschlagbewegung des Fahrzeugs heranzuziehen.

Da eine die Sicherheit von Fahrzeuginsassen gefährdende Bewegung eines Kraftfahrzeugs typischerweise mit einem Ruck beginnt oder erst durch einen derartigen Ruck des Fahrzeugs ausgelöst wird, erlaubt die Ermittlung der zeitlichen Änderung der Fahrzeugbeschleunigung in einer linearen Richtung nicht nur eine besonders frühzeitige, sondern auch eine besonders verlässliche Einschätzung der Gefährlichkeit der Roll- oder Überschlagbewegung. Beispielsweise lässt sich anhand der Stärke eines lateralen Fahrzeugrucks mit hoher Wahrscheinlichkeit vorhersagen, ob es zu einem Überschlag des Fahrzeugs kommen wird oder nicht.

Im Falle eines entsprechend starken Fahrzeugrucks können also besonders frühzeitig geeignete Sicherheitsmaßnahmen zum Schutz der Fahrzeuginsassen eingeleitet werden, wie z.B. die Straffung von Sicherheitsgurten, die Auslösung von Airbags und/oder das Hochklappen oder Ausfahren eines Überrollbügels oder einer verstärkten Nackenstütze. Umgekehrt kann bei einem vergleichsweise niedrigen Fahrzeugruck eine Einleitung von unnötigen Sicherheitsmaßnahmen verhindert werden. Die Sicherheit von Fahrzeuginsassen wird dadurch erheblich erhöht.

Zur Beurteilung der Roll- oder Überschlagbewegung kann die zeitliche Änderung der Fahrzeugbeschleunigung in einer linearen Richtung oder in mehreren linearen Richtungen berücksichtigt werden. Vorzugsweise sind diese linearen Richtungen durch die Fahrzeugachsen vorgegeben.

Dabei erweist sich die Feststellung eines lateralen Fahrzeugrucks, mit anderen Worten einer zeitlichen Änderung der Fahrzeugbeschleunigung in horizontaler Richtung quer zur Längsrichtung des Fahrzeugs, d.h. in Y-Richtung, als ein besonders zuverlässiges Mittel zum Vorhersagen von Roll- oder Überschlagbewegungen des Fahrzeugs, da einer Roll- oder Überschlagbewegung des Fahrzeugs um seine Längsachse, beispielsweise bei einem Abkommen des Fahrzeugs von einer befestigten Fahrbahn (Sandeinzug) oder bei einem, insbesondere seitlichen, Kontakt des Fahrzeugs mit einer Bordsteinkante, erfahrungsgemäß ein lateraler Ruck vorausgeht.

Bei Bedarf kann zur Erhöhung der Genauigkeit der Beurteilung der Roll- oder Überschlagbewegung bzw. zur Verbesserung des Vorhersageergebnisses, auch die ermittelte zeitliche Änderung der Fahrzeugbeschleunigung in einer oder in mehreren weiteren linearen Richtungen, beispielsweise in Längsrichtung des Fahrzeugs (X-Richtung) und/oder in vertikaler Richtung (Z-Richtung) in die Beurteilung der Fahrzeugbewegung einflie-ßen.

Vorteilhafte Ausführungsformen der Erfindung sind den Unteransprüchen, der Beschreibung und der Zeichnung zu entnehmen.

Gemäß einer bevorzugten Ausbildung des erfindungsgemäßen Verfahrens wird die zeitliche Änderung der Fahrzeugbeschleunigung aus zwei gemessenen Beschleunigungswerten ermittelt. Genauer gesagt erfolgt die Ermittlung der zeitlichen Änderung der Fahrzeugbeschleunigung durch die Bildung der Differenz zwischen zwei, vorzugsweise nacheinander gemessenen Beschleunigungswerten. Mit anderen Worten stellt der Fahrzeugruck die Änderung der Fahrzeugbeschleunigung während eines vorgegebenen Zeitintervalls, d.h. also die zeitliche Ableitung der Fahrzeugbeschleunigung, dar.

Zur Ermittlung des Fahrzeugrucks kann auf die Messdaten bereits vorhandener Beschleunigungssensoren zurückgegriffen werden. Dadurch lässt sich das Verfahren leicht in ein bestehendes Fahrzeugsicherheitssystem integrieren. Erforderlich ist hierfür lediglich eine Änderung des Rechenalgorithmus, mit anderen Worten also eine einfache Umprogrammierung einer entsprechenden Auswerteeinheit.

Vorteilhafterweise wird die zeitliche Änderung der Fahrzeugbeschleunigung zumindest zeitweise periodisch mit der Periode T1 ermittelt. Die Länge der Periode T 1 wird vorzugsweise besonders kurz gewählt und entspricht idealerweise dem Zeitintervall, in dem die Messwerte der Beschleunigungssensoren abgefragt werden. Die Länge der Periode T1 kann aber auch ein Mehrfaches dieser Intervalle betragen. Damit die Erkennung einer gefährlichen Fahrzeugbewegung, beispielsweise einer Roll- oder Überschlagbewegung, in etwa 100 ms bis 200 ms erfolgen kann, sollte die Länge der Periode T1 jedoch nicht mehr als wenige 10 ms betragen.

Wie bereits erwähnt wurde, wird die zeitliche Änderung der Fahrzeugbeschleunigung aus der Differenz zwischen zwei Beschleunigungswerten errechnet, die mit einem Abstand von einer Periodenlänge gemessen wurden. Korrekterweise muss die Beschleunigungsdifferenz zur Berechnung des Fahrzeugrucks durch die Länge der Periode T1 geteilt werden. Bei einer konstanten Periodenlänge T1 ist es jedoch einfacher, die Länge der Periode T1 als "1" zu definieren. Errechnet wird auf diese Weise ein auf die Länge der Periode T1 normierter Fahrzeugruck.

Gemäß einer weiteren bevorzugten Ausführungsform wird ein zur Beurteilung der Fahrzeugbewegung beitragender Zähler erhöht, wenn die zeitliche Änderung der Fahrzeugbeschleunigung einer Periode T1 einen Schwellwert überschreitet. Entsprechend kann der Zähler erniedrigt werden, wenn die zeitliche Änderung der Fahrzeugbeschleunigung einer Periode T1 den Schwellwert unterschreitet.

Nach jeder Ermittlung der zeitlichen Änderung der Fahrzeugbeschleunigung wird der ermittelte Fahrzeugruck also mit einem Schwellwert verglichen und geprüft, ob der ermittelte Fahrzeugruck den Schwellwert über- oder unterschreitet. Bei jeder Überschreitung des Schwellwerts wird der Zähler erhöht und/oder bei einer Unterschreitung des Schwellwerts erniedrigt. Der Zähler ist mit anderen Worten ein Maß dafür, wie oft die ermittelte zeitliche Änderung der Fahrzeugbeschleunigung den Schwellwert überschritten bzw. unterschritten hat. Der Zähler ist somit ein Indikator für die Stärke und Dauer des ermittelten Fahrzeugrucks.

Die Erhöhung und/oder Erniedrigung des Zählers kann jeweils um einen vorgegebenen festen, insbesondere ganzzahligen, Betrag erfolgen.

Vorteilhafterweise erfolgt die Erhöhung und/oder Erniedrigung des Zählers jedoch um einen vorgegebenen, insbesondere ganzzahligen, Betrag, dessen Größe von der Abweichung der ermittelten zeitlichen Änderung der Fahrzeugbeschleunigung von dem Schwellwert abhängig ist.

Beispielsweise kann der Zähler bei einer geringen Über- bzw. Unterschreitung um den Wert "1", bei einer mittleren Über- bzw. Unterschreitung um den Wert "2" und bei einer besonders hohen Über- bzw. Unterschreitung des Schwellwerts um den Wert "4" erhöht bzw. erniedrigt werden. Die voranstehenden Werte sind rein beispielhaft genannt und können je nach Anwendungsfall auch anders gewählt sein.

Ebenso ist es möglich die gemessenen zeitlichen Änderungen der Fahrzeugbeschleunigung in weniger oder mehr Kategorien zu unterteilen, als die genannten Kategorien "gering", "mittel" und "hoch". Darüber hinaus ist es möglich, die genannten Kategorien und/oder Werte für die Überschreitung des Schwellwerts und für die Unterschreitung des Schwellwerts unterschiedlich festzulegen.

Durch die an die Stärke der Abweichung des Fahrzeugrucks von dem Schwellwert angepasste Erhöhung bzw. Erniedrigung des Zählers wird der Stärke der gemessenen zeitlichen Änderung der Fahrzeugbeschleunigung in besonderer Weise Rechnung getragen. Dadurch kann ein starker Fahrzeugruck besonders schnell detektiert werden. Dies ermöglicht eine noch schnellere Erkennung einer gefährlichen Fahrzeugbewegung, z.B. eine noch raschere Vorhersage einer Roll- oder Überschlagbewegung, und dadurch eine noch frühzeitigere Aktivierung des Fahrzeugsicherheitssystems.

Alternativ kann die Erhöhung und/oder Erniedrigung des Zählers proportional zur Abweichung der ermittelten zeitlichen Änderung der Fahrzeugbeschleunigung von dem Schwellwert sein. Auch bei dieser Variante wirkt sich die Stärke der Abweichung des ermittelten Fahrzeugrucks von dem Schwellwert direkt auf das Maß der Erhöhung bzw. Erniedrigung des Zählers aus. Diese Variante ermöglicht somit ebenfalls eine besonders rasche Erkennung eines gefährlichen Fahrzeugrucks bzw. einer besonders schnellen Vorhersage einer gefährlichen Fahrzeugbewegung und dadurch letztlich eine erhöhte Sicherheit der Fahrzeuginsassen.

Vorzugsweise wird die Fahrzeugbewegung als kritisch eingestuft, wenn der Zähler einen vorbestimmten Zählerschwellwert überschreitet. Durch den Zählerschwellwert ist festgelegt, wie lange der ermittelte Fahrzeugruck einer gewissen Stärke unbeachtlich bleibt bzw. ab wann er als gefährlich eingestuft wird.

So kann der Zählerschwellwert überschritten werden, wenn die ermittelten zeitlichen Änderungen der Fahrzeugbeschleunigung über einen Zeitraum von mehreren Perioden T1 hinweg den vorgegebenen Schwellwert nur leicht überschreiten oder zeitweilig sogar unterschreiten. Durch eine entsprechende Festsetzung des Zählerschwellwerts kann somit auch ein vergleichsweise schwacher Fahrzeugruck frühzeitig erkannt werden.

Wird der Zähler in Abhängigkeit von der Stärke der Abweichung der zeitlichen Änderung der Fahrzeugbeschleunigung von dem Schwellwert erhöht, so kann der Zähler bei einer entsprechenden Stärke des Fahrzeugrucks und bei einer entsprechenden Vorgabe der Schrittweite, mit welcher der Zähler erhöht wird, auch nach wenigen, z.B. ein oder zwei, Perioden T1 bereits den Zählerschwellwert überschreiten. Somit ist ein starker Fahrzeugruck besonders schnell detektierbar, und entsprechende Sicherheitsmaßnahmen können noch früher eingeleitet werden.

Gemäß einer weiteren vorteilhaften Ausbildung des erfindungsgemäßen Verfahrens wird zusätzlich eine zweite zeitliche Änderung der Fahrzeugbeschleunigung aus zwei Beschleunigungswerten ermittelt, die ein Zeitintervall T2 definieren, welches ein ganzzahliges Vielfaches der Periode T1 ist.

Der Fahrzeugruck wird einerseits also periodisch mit einer Periode T1 und andererseits zusätzlich über mehrere Perioden T1 hinweg ermittelt. Es findet mit anderen Worten eine periodische Bestimmung von zwei zeitlichen Änderungen der Fahrzeugbeschleunigung über unterschiedlich lange Zeitfenster statt.

Durch die Ermittlung der zweiten zeitlichen Änderung der Fahrzeugbeschleunigung über einen längeren Zeitraum bleiben kurzzeitige Schwankungen der ersten ermittelten zeitlichen Änderung der Fahrzeugbeschleunigung unberücksichtigt, die beispielsweise durch Fehler bei der Messung der Fahrzeugbeschleunigungen verursacht werden können. Hierdurch wird die Zuverlässigkeit der Detektion eines als gefährlich einzustufenden Fahrzeugrucks erheblich erhöht.

Vorzugsweise wird die Fahrzeugbewegung als kritisch eingestuft, wenn sowohl die zweite zeitliche Änderung der Fahrzeugbeschleunigung als auch jede innerhalb des Zeitintervalls T2 ermittelte erste zeitliche Änderung der Fahrzeugbeschleunigung jeweils einen vorbestimmten Schwellwert überschreitet. Die Schwellwerte für die erste und die zweite zeitliche Änderung der Fahrzeugbeschleunigung können gleich oder unterschiedlich gewählt sein, wobei im letzteren Fall der Schwellwert für die erste zeitliche Änderung der Fahrzeugbeschleunigung bevorzugt etwas niedriger als der Schwellwert für die zweite zeitliche Änderung der Fahrzeugbeschleunigung zu wählen ist.

Dadurch, dass die Fahrzeugbewegung nur dann als kritisch eingestuft wird, wenn alle zeitlichen Änderungen der Fahrzeugbeschleunigung, d.h. sowohl alle ersten zeitlichen Änderungen als auch die zweite zeitliche Änderung der Fahrzeugbeschleunigung, ihren jeweiligen Schwellwert überschreiten, ist sichergestellt, dass ausnahmslos relevante Fahrzeugbewegungen als gefährlich eingestuft werden. Dies erhöht die Zuverlässigkeit der Erkennung einer gefährlichen Fahrzeugbewegung und verhindert eine unnötige Einleitung von Sicherheitsmaßnahmen.

Ein weiterer Gegenstand der Erfindung ist ein Verfahren zum Aktivieren eines Fahrzeugsicherheitssystems, bei dem das Fahrzeugsicherheitssystem aktiviert wird, wenn eine nach einem Verfahren gemäß Anspruch 8 oder 10 detektierte Roll- oder Überschlagbewegung eines Kraftfahrzeugs als kritisch eingestuft wird.

Da die Aktivierung des Fahrzeugssicherheitssystems auf dem erfindungsgemäßen Verfahren zum Beurteilen einer Bewegung eines Kraftfahrzeugs basiert, gelten die voranstehend genannten Vorteile entsprechend.

Dadurch, dass bei der Beurteilung der Roll- oder Überschlagbewegung des Kraftfahrzeugs eine zeitliche Änderung der Fahrzeugbeschleunigung in wenigstens einer linearen Richtung, d.h. ein Ruck des Kraftfahrzeugs, berücksichtigt wird, welcher erfahrungsgemäß am Anfang einer gefährlichen Fahrzeugbewegung steht bzw. diese auslöst, kann eine die Sicherheit von Fahrzeuginsassen gefährdende Roll- oder Überschlagbewegung besonders frühzeitig detektiert werden. Dies ermöglicht eine besonders schnelle und vor allem rechtzeitige Einleitung von Sicherheitsmaßnahmen zum Schutz der Fahrzeuginsassen, wodurch die Sicherheit der Fahrzeuginsassen erheblich erhöht wird.

Vorteilhafterweise wird das Fahrzeugsicherheitssystem nur dann aktiviert, wenn zusätzlich die Winkelposition, die Winkelgeschwindigkeit und/oder die Winkelbeschleunigung des Fahrzeugs bezüglich einer Fahrzeugachse oder mehrerer Fahrzeugachsen jeweils innerhalb eines vorbestimmten kritischen Bereichs liegen bzw. liegt. Auf diese Weise kann eine unnötige Aktivierung des Fahrzeugsicherheitssystems vermieden werden, beispielsweise wenn ein als gefährlich eingestufter lateraler Fahrzeugruck letztlich wider Erwarten doch nicht in eine Roll- oder Überschlagbewegung des Fahrzeugs übergeht.

Weiterer Gegenstand der Erfindung ist außerdem eine Vorrichtung zur Beurteilung einer Roll- oder Überschlagbewegung eines Kraftfahrzeugs, insbesondere einer die Sicherheit von Fahrzeuginsassen beeinflussenden Roll- oder Überschlagbewegung, mit wenigstens einem Sensor zum Messen der Beschleunigung des Fahrzeugs in wenigstens einer linearen Richtung, insbesondere in Richtung einer Fahrzeugachse, einer mit dem Sensor verbundenen Recheneinheit zur Ermittlung der zeitlichen Änderung der Fahrzeugbeschleunigung aus zwei gemessenen Beschleunigungswerten, einer mit der Recheneinheit verbundenen Komparatoreinheit zum Vergleichen der ermittelten zeitlichen Änderung der Fahrzeugbeschleunigung mit einem vorgegebenen Schwellwert, und einer mit der Komparatoreinheit verbundenen Auswerteeinheit zum Auswerten einer Abweichung der ermittelten zeitlichen Änderung der Fahrzeugbeschleunigung von dem Schwellwert.

Mit der erfindungsgemäßen Vorrichtung lassen sich die erfindungsgemä-ßen Verfahren durchführen und die damit verbundenen Vorteile erreichen.

Die Recheneinheit zur Ermittlung der zeitlichen Änderung der Fahrzeugbeschleunigung, die Komparatoreinheit und die Auswerteeinheit können jeweils separate Einheiten sein, vorzugsweise sind sie jedoch in einer zentralen Recheneinheit zusammengefasst.

Die Erhöhung und/oder Erniedrigung eines zur Beurteilung der zeitlichen Änderung der Fahrzeugbeschleunigung beitragenden Zählers wird vorzugsweise in der Auswerteeinheit durchgeführt.

Alternativ können erste und zweite zeitliche Änderungen der Fahrzeugbeschleunigung über jeweils unterschiedlich lange Zeitintervalle, d.h. mit unterschiedlichen Periodenlängen T1 und T2, in der Recheneinheit ermittelt, in der Komparatoreinheit mit vorgegebenen Schwellwerten verglichen und entsprechende Abweichungen von dem Schwellwert in der Auswerteeinheit ausgewertet werden.

Nachfolgend wird die Erfindung rein beispielhaft anhand einer vorteilhaften Ausführungsform unter Bezugnahme auf die beigefügte Zeichnung beschrieben. Es zeigen:
- Fig. 1: ein Flussdiagramm einer Ausführungsform des erfindungsgemäßen Verfahrens zum Beurteilen einer Bewegung eines Kraftfahrzeugs;
- Fig. 2 und 3: graphische Darstellungen der zeitlichen Änderung der lateralen Fahrzeugbeschleunigung in Abhängigkeit von der Zeit im Falle einer Fahrzeugbewegung, die nicht zu einem Überschlag des Fahrzeugs führt; und
- Fig. 4 und 5: graphische Darstellungen der zeitlichen Änderung der lateralen Fahrzeugbeschleunigung in Abhängigkeit von der Zeit im Falle einer Fahrzeugbewegung, die in einen Überschlag des Fahrzeugs übergeht.

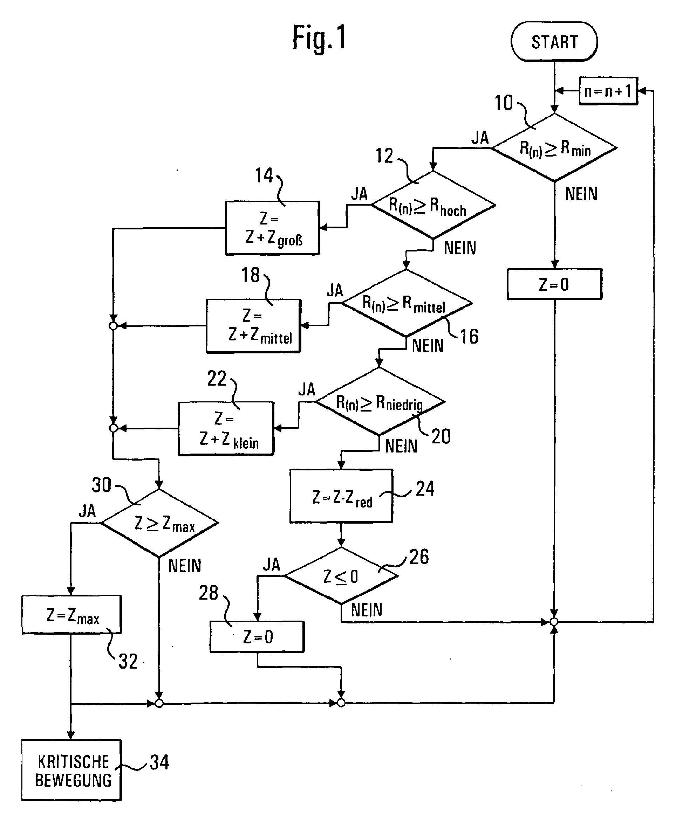

Das in Fig. 1 dargestellte Verfahren zum Beurteilen einer Bewegung eines Kraftfahrzeugs beruht auf der Auswertung eines Zählers Z, der immer dann erhöht wird, wenn eine aus gemessenen Beschleunigungen ermittelte zeitliche Änderung R(n) der Fahrzeugbeschleunigung, d.h. ein Ruck des Fahrzeugs, einen vorgegebenen Schwellwert überschreitet, und der immer dann erniedrigt wird, wenn der Fahrzeugruck R(n) den Schwellwert unterschreitet.

Im vorliegenden Ausführungsbeispiel wird lediglich die laterale Bewegung des Kraftfahrzeugs beurteilt, d.h. die horizontale Bewegung quer zur Fahrzeuglängsrichtung. Die laterale Bewegung wird auch als Bewegung in Y-Richtung bezeichnet.

Zusätzlich oder alternativ kann aber auch die Fahrzeugbewegung in Längsrichtung des Fahrzeugs, d.h. in X-Richtung, und/oder die Fahrzugbewegung in vertikaler Richtung (Z-Richtung) beurteilt werden. Hierfür müssen lediglich entsprechende Sensoren zur Messung der Beschleunigung des Fahrzeugs in X- bzw. Z-Richtung vorgesehen sein. Die Ermittlung der zeitlichen Änderung der Fahrzeugbeschleunigung sowie die Beurteilung der Bewegung des Fahrzeugs in X- bzw. Z-Richtung erfolgen entsprechend dem nachfolgend beschriebenen Verfahren.

Das Verfahren wird bei Aktivierung des Kraftfahrzeugs gestartet, beispielsweise durch das Einschalten des Motors. Zu Beginn des Verfahrens erfolgt eine Initialisierung des Zählers Z, durch welche der Zähler Z auf den Wert "0" zurückgesetzt wird.

In regelmäßigen Zeitabständen, bei dem vorliegenden Ausführungsbeispiel alle 1 ms, wird mittels eines geeigneten Beschleunigungssensors die Beschleunigung des Kraftfahrzeugs in Y-Richtung gemessen. Die Messung der Fahrzeugbeschleunigung erfolgt somit periodisch mit einer Periodenlänge T1, die im vorliegenden Fall 0,1 ms beträgt. Jede Periode T1 definiert einen Rechenschritt n, in dem aus jeweils zwei aufeinanderfolgend gemessenen Beschleunigungswerten a(n) und a(n-1) der laterale Fahrzeugruck R(n) des Kraftfahrzeugs ermittelt wird.

Unter dem Fahrzeugruck R(n) wird dabei die Änderung der Fahrzeugbeschleunigung über den Zeitraum einer Periode T1 verstanden. Zur Vereinfachung des Rechenaufwands erfolgt die Beurteilung der Fahrzeugbewegung anhand von normierten zeitlichen Änderungen der Fahrzeugbeschleunigung, d.h. der Fahrzeugruck R(n) wird nicht als Beschleunigungsänderung pro Zeiteinheit berechnet, sondern pro Periodenlänge T1, die der Einfachheit halber auf dem Wert "1" festgesetzt ist. Als Maß für den Fahrzeugruck R(n) dient letztlich also die Differenz zwischen jeweils nacheinander gemessenen Beschleunigungswerten a(n) und a(n-1).

Sobald in einem n-ten Rechenschritt eine Fahrzeugbeschleunigung a(n) gemessen und die zugehörige zeitliche Änderung R(n) der Fahrzeugbeschleunigung ermittelt wurde, wird in einem Verfahrensschritt 10 geprüft, ob der Betrag des ermittelten Fahrzeugrucks R(n) eine vorgegebene Mindestschwelle Rₘᵢₙ überschreitet.

Sofern die zeitliche Änderung R(n) der Fahrzeugbeschleunigung unterhalb der Mindestschwelle Rₘᵢₙ bleibt, wird der Zähler Z auf seinem Ausgangswert "0" belassen oder auf "0" zurückgesetzt und in einem nächsten Rechenschritt n+ 1 die Abfrage der Fahrzeugbeschleunigung und die Ermittlung des Fahrzeugsrucks wiederholt.

Überschreitet dagegen die ermittelte zeitliche Änderung R(n) der Fahrzeugbeschleunigung den Mindestschwellwert Rₘᵢₙ, so wird der Zähler Z verändert.

Zu diesem Zweck wird in einem Verfahrensschritt 12 als nächstes geprüft, ob die zeitliche Änderung R(n) der Fahrzeugbeschleunigung einen hohen Schwellwert R_{hoch} überschreitet. Ist dies der Fall, so wird der Zähler Z in einem Verfahrensschritt 14 um einen großen Wert ΔZ erhöht.

Überschreitet der ermittelte Fahrzeugruck R(n) den hohen Schwellwert R_{hoch} jedoch nicht, so wird in einem Verfahrensschritt 16 als nächstes geprüft, ob die zeitliche Änderung R(n) der Fahrzeugbeschleunigung einen mittleren Schwellwert Rₘᵢₜₜₑₗ überschreitet. Wenn dies der Fall ist, wird der Zähler Z in einem Verfahrensschritt 18 um einen mittleren Wert ΔZₘᵢₜₜₑₗ erhöht.

Wenn der Betrag der ermittelten zeitlichen Änderung R(n) der Fahrzeugbeschleunigung auch den mittleren Schwellwert Rₘᵢₜₜₑₗ nicht überschreitet, so wird in einem Verfahrensschritt 20 als nächstes geprüft, ob die zeitliche Änderung R(n) der Fahrzeugbeschleunigung einen vorbestimmten niedrigen Schwellwert R_{niedrig} überschreitet. Ist dies der Fall, so wird der Zähler Z in einen Verfahrensschritt 22 um einen kleinen Wert ΔZₖₗₑᵢₙ erhöht.

Überschreitet der ermittelte Fahrzeugruck R(n) auch den niedrigen Schwellwert R_{niedrig} nicht, so wird der Zähler Z in einem Verfahrensschritt 24 um einen vorgegebenen Betrag ΔZ_{red} vermindert.

In diesem Fall wird in einem nachfolgenden Verfahrensschritt 26 geprüft, ob der Zähler Z durch die Verminderung kleiner als "0" geworden ist. Wenn dies der Fall ist, so wird der Zähler Z in einem Verfahrensschritt 28 zurück auf "0" gesetzt. Ist der Zähler Z nach der Verminderung im Schritt 24 dagegen positiv geblieben, so behält er seinen aktuellen Wert bei und überträgt diesen in den nächsten Rechenschritt n+1.

Im Falle einer Erhöhung des Zählers Z gemäß einem der Schritte 14, 18 oder 22 wird in einem Verfahrensschritt 30 geprüft, ob der Zähler Z einen Zählerschwellwert Zₘₐₓ überschreitet. Ist dies nicht der Fall, so behält der Zähler seinen aktuellen Wert bei, und es wird im nächsten Rechenschritt n+ 1 mit dem Verfahrensschritt 10 fortgefahren.

Wird im Verfahrensschritt 30 hingegen eine Überschreitung des Zählerschwellwerts Zₘₐₓ festgestellt, so wird dem Zähler Z in einem Verfahrensschritt 32 der Schwellwert Zₘₐₓ zugeordnet.

Eine Überschreitung des Zählerschwellwerts Zₘₐₓ führt dazu, dass die Bewegung des Kraftfahrzeugs in einem Verfahrensschritt 34 als kritisch eingestuft wird. Die Überschreitung des Zählerschwellwerts Zₘₐₓ kennzeichnet mit anderen Worten einen kritischen Fahrzeugruck und stellt einen Indikator für eine die Sicherheit der Fahrzeuginsassen gefährdende Bewegung des Fahrzeugs dar. Bei der Beobachtung des lateralen Fahrzeugrucks gemäß dem vorliegenden Ausführungsbeispiel ist die Überschreitung des Zählerschwellwerts Zₘₐₓ beispielsweise ein Indiz für einen unmittelbar bevorstehenden Überschlag des Fahrzeugs.

Eine kritische Fahrzeugbewegung kann zum einen durch eine besonders hohe zeitliche Änderung R(n) der Fahrzeugbeschleunigung innerhalb einer Periode T1 oder innerhalb weniger Perioden T1, d.h. durch einen kurzen starken Fahrzeugruck, und zum anderen durch kleinere zeitliche Änderungen R(n) der Fahrzeugbeschleunigung eingeleitet werden, die über mehrere Perioden T1 auftreten.

Wie bereits erwähnt wurde, sind die zeitlichen Änderungen R(n) der Fahrzeugbeschleunigung bei der dargestellten Ausführungsform des Verfahrens auf eine Periodenlänge T1 von "1" normiert. Die voranstehend genannten Schwellwerte für die zeitliche Änderung der Fahrzeugbeschleunigung weisen im vorliegenden Ausführungsbeispiel daher die gleiche physikalische Einheit wie die Fahrzeugbeschleunigung auf und werden hier in [g] angegeben, wobei 1 g ≈ 9.81 m/s² ist.

Ein möglicher Wert für die Mindestschwelle Rₘᵢₙ der auf die Periodenlänge T1 normierten zeitlichen Änderung R(n) der Fahrzeugbeschleunigung liegt beispielsweise zwischen 1 g und 3 g. Demgegenüber kann der niedrige Schwellwert R_{niedrig} für die zeitliche Änderung der Fahrzeugbeschleunigung zwischen 2 g und 5 g, der mittlere Schwellwert Rₘᵢₜₜₑₗ zwischen 3 g und 6 g und der hohe Schwellwert R_{hoch} zwischen 5 g und 10 g liegen.

Als mögliche Werte für die Beträge ΔZₖₑᵢₙ, ΔZₘᵢₜₜₑₗ und ΔZ_{groß}, um welche der Zähler Z bei einer entsprechenden Schwellwertüberschreitung jeweils erhöht wird, kommen beispielsweise die Werte 1, 2, 4 in Betracht.

Die Verminderung des Zählers Z im Falle einer Unterschreitung des Schwellwerts R_{niedrig} kann z.B. um den Wert ΔZ_{red} = 2 erfolgen. Ein möglicher Wert für den Zählerschwellwert Zₘₐₓ liegt bei 10.

Sobald der Zähler Z den vorgegebenen Zählerschwellwert Zₘₐₓ im Verfahrensschritt 32 überschreitet und die Bewegung des Kraftfahrzeugs im Verfahrensschritt 34 als kritisch eingestuft wird, kann ein Verfahren zum Aktivieren eines Fahrzeugsicherheitssystems eingeleitet werden.

Dieses Verfahren kann die unmittelbare Einleitung von geeigneten Sicherheitsmaßnahmen zum Schutz der Fahrzeuginsassen umfassen, z.B. die Aktivierung von Airbags, die Straffung von Sicherheitsgurten und/oder das Ausfahren oder Hochklappen eines Überrollbügels oder von verstärkten Nackenstützen.

Alternativ zur sofortigen Einleitung der Sicherheitsmaßnahmen kann das Verfahren zum Aktivieren des Fahrzeugsicherheitssystems jedoch auch Maßnahmen zur Verifikation der Gefährlichkeit der Fahrzeugbewegung umfassen.

Diese Maßnahmen können zusätzlich zur zeitlichen Änderung der Fahrzeugbeschleunigung in einer linearen Richtung, d.h. zusätzlich zum Fahrzeugruck, die Berücksichtigung weiterer Parameter bzw. Messwerte bei der Beurteilung der Fahrzeugbewegung einschließen.

Die Ermittlung dieser zusätzlichen Parameter bzw. Messwerte kann dabei bereits während der Überwachung der zeitlichen Änderung der Fahrzeugbeschleunigung, d.h. also parallel zur Detektion des Fahrzeugsrucks, erfolgen oder erst, nachdem eine Fahrzeugbewegung anhand des Fahrzeugrucks als kritisch eingestuft wurde.

Als zusätzliche Fahrzeugparameter kommen die zeitlichen Änderungen der Fahrzeugbeschleunigung in einer der oder in beiden Richtungen in Frage, die bei der Beurteilung der Fahrzeugbewegung bislang nicht berücksichtigt wurden, im vorliegenden Ausführungsbeispiel also um den Fahrzeugruck in Fahrzeuglängsrichtung (X-Richtung) bzw. in vertikaler Richtung (Z-Richtung). Darüber hinaus kann bzw. können aber auch die Winkelposition, die Winkelgeschwindigkeit und/oder die Winkelbeschleunigung des Fahrzeugs um eine oder mehrere Achsen des Fahrzeugs zur Beurteilung der Gefährlichkeit der Fahrzeugbewegung herangezogen werden.

Im Ergebnis würden geeignete Sicherheitsmaßnahmen zum Schutz der Fahrzeuginsassen nur dann ausgelöst, wenn sowohl die zeitliche Änderung der Fahrzeugbeschleunigung, d.h. der Fahrzeugruck, in einer Richtung bzw. in mehreren Richtungen als gefährlich eingestuft wird, als auch die Winkelposition, die Winkelgeschwindigkeit und/oder die Winkelbeschleunigung des Fahrzeugs bezüglich einer Fahrzeugachse oder mehrerer Fahrzeugachsen jeweils innerhalb eines vorbestimmten kritischen Bereiches liegen bzw. liegt.

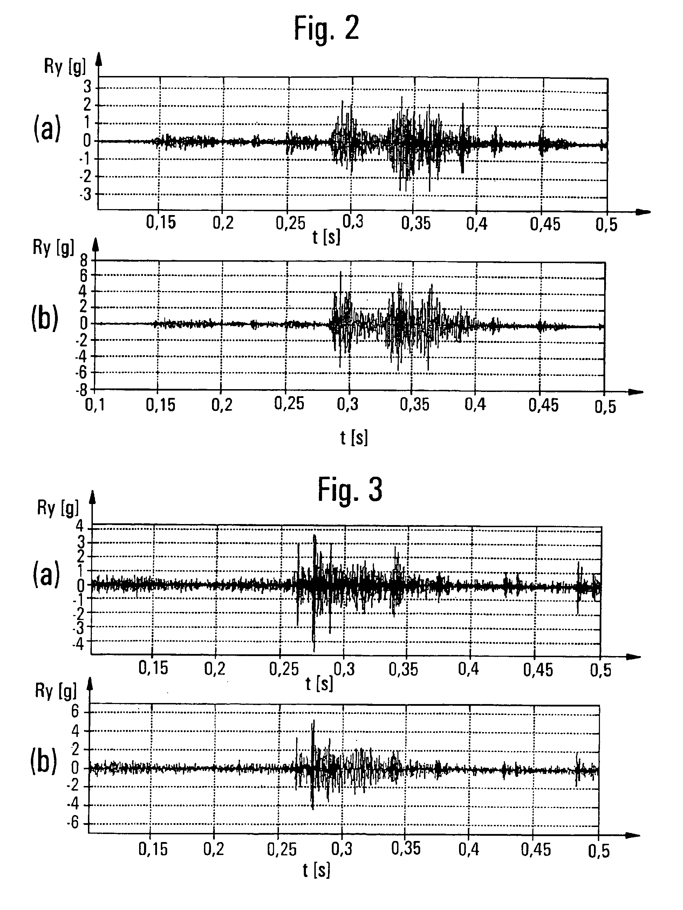

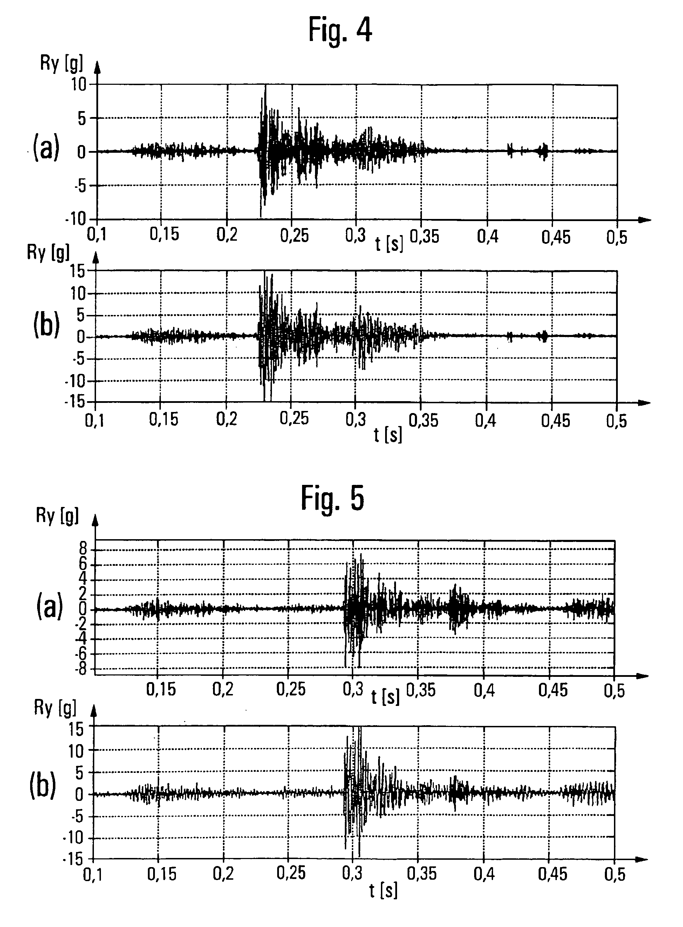

Fig. 2 bis 5 zeigen den zeitlichen Verlauf eines lateralen Fahrzeugrucks während unterschiedlicher Bewegungen eines Kraftfahrzeugs beim Abkommen von einer befestigten Fahrbahn, d.h. bei Sandeinzug. Dabei ist in Fig. 2 und 3 jeweils eine Fahrzeugbewegung dargestellt, die nicht zu einem Überschlag des Fahrzeugs führt, während Fig. 4 und 5 Situationen abbilden, in welchen die Fahrzeugbewegung tatsächlich in einem Überschlag des Fahrzeugs endet.

Dargestellt ist jeweils die zeitliche Änderung R_{y} der Fahrzeugbeschleunigung in Y-Richtung in Abhängigkeit von der Zeit t, welche in Sekunden angegeben ist. Die gezeigten zeitlichen Änderungen R_{y} der Fahrzeugbeschleunigung sind jeweils auf eine als "1" festgesetzte Periodenlänge T1 normiert. Der Fahrzeugruck trägt somit dieselbe Einheit wie die Fahrzeugbeschleunigung und wird hier in [g] angegeben, wobei 1 g ≈ 9.81 m/s² ist.

Dabei liegt dem oberen Graph (a) jeder Figur eine Periodenlänge T1 von 0,1 ms zugrunde, was der Periode entspricht, mit welcher der Beschleunigungssensor oder die Beschleunigungssensoren tatsächlich ausgelesen werden. Dem unteren Graph (b) jeder Figur liegt dagegen eine Periodenlänge T1' zugrunde, die fünfmal so lang wie die tatsächliche Ausleseperiode ist und somit 0,5 ms beträgt.

Der hohe Schwellwert R_{hoch}, bei dessen Überschreitung der Zähler Z um einen großen Wert ΔZ_{groß} erhöht wird, wurde im Falle der Periodenlänge T1 (Graph (a)) auf 5 g und im Falle der Periodenlänge T1' (Graph (b)) auf 7 g festgesetzt.

Wie den Fig. 2 und 3 (kein Überschlag) zu entnehmen ist, wird ein erster signifikanter Fahrzeugruck etwa zwischen 250 ms und 300 ms nach Beginn der Fahrzeugbewegung festgestellt. Im Falle der Periodenlänge T1 (Graph (a)) übersteigt der ermittelte Fahrzeugruck jedoch nicht den Wert 4 g, sondern er bleibt deutlich unter dem mit 5 g angegebenen hohen Schwellwert R_{hoch}. Auch im Falle der Periodenlänge T1' bleibt der Fahrzeugruck im Wesentlichen unter dem Wert 6 g und somit unter dem festgesetzten hohen Schwellwert R_{hoch} von 7 g.

Anders verhält sich die zeitliche Änderung der lateralen Fahrzeugbeschleunigung im Falle einer Fahrzeugbewegung, die so heftig ist, dass sie zu einem Überschlag des Fahrzeugs führt.

Wie Fig. 4 zeigt, wird bereits im Zeitraum von 200 ms bis 250 ms nach Beginn der Fahrzeugbewegung ein vergleichsweise starker Fahrzeugruck detektiert, der im Falle der Periodenlänge T1 (Graph (a)) den Schwellwert R_{hoch} von 5 g weit übertrifft und auch im Falle der Periodenlänge T1' (Graph (b)) den hohen Schwellwert R_{hoch} von 7 g deutlich übersteigt.

Gleiches gilt auch für die in Fig. 5 dargestellte Situation, in welcher ein signifikanter Fahrzeugruck nach etwa 300 ms detektiert wird, der sowohl bei einer zugrundegelegten Periodenlänge T1 (Graph (a)) als auch bei einer Periodenlänge T1' (Graph (b)) die jeweiligen hohen Schwellwerte R_{hoch} weit übertrifft.

Die Fig. 2 bis 5 belegen, dass die zeitliche Änderung der Fahrzeugbeschleunigung in einer linearen Richtung bei einer entsprechenden Festlegung von Schwellwerten einen geeigneten Parameter zur Beurteilung der Gefährlichkeit der Bewegung eines Kraftfahrzeugs darstellt.

Insbesondere ermöglicht die Berücksichtigung des lateralen Fahrzeugrucks eine zuverlässige und schnelle Vorhersage darüber, ob eine Roll- oder Überschlagbewegung des Fahrzeugs um dessen Längsachse zu erwarten ist oder nicht.

## Patentansprüche

1. Verfahren zum Beurteilen einer Roll- oder Überschlagbewegung eines Kraftfahrzeugs, insbesondere einer die Sicherheit von Fahrzeuginsassen beeinflussenden Roll- oder Überschlagbewegung, bei dem die Beschleunigung des Fahrzeugs in wenigstens einer linearen Richtung, insbesondere in Richtung einer Fahrzeugachse mehrfach gemessen wird,
**dadurch gekennzeichnet, dass**
die zeitliche Änderung der Fahrzeugbeschleunigung in der wenigstens einen linearen Richtung ermittelt wird und
die ermittelte zeitliche Änderung der Fahrzeugbeschleunigung in der wenigstens einen linearen Richtung bei der Beurteilung der Roll- oder Überschlagbewegung berücksichtigt wird.

2. Verfahren nach Anspruch 1,
**dadurch gekennzeichnet,**
**dass** die zeitliche Änderung der Fahrzeugbeschleunigung aus zwei gemessenen Beschleunigungswerten ermittelt wird.

3. Verfahren nach Anspruch 1 oder 2,
**dadurch gekennzeichnet,**
**dass** die zeitliche Änderung der Fahrzeugbeschleunigung zumindest zeitweise periodisch mit der Periode T1 ermittelt wird.

4. Verfahren nach Anspruch 3,
**dadurch gekennzeichnet,**
**dass** ein zur Beurteilung der Roll- oder Überschlagbewegung beitragender Zähler erhöht wird (14, 18, 22), wenn die zeitliche Änderung der Fahrzeugbeschleunigung einer Periode T1 einen Schwellwert überschreitet (12, 16, 20), und/oder der Zähler erniedrigt wird (24), wenn die zeitliche Änderung der Fahrzeugbeschleunigung einer Periode T1 den Schwellwert unterschreitet (20).

5. Verfahren nach Anspruch 4,
**dadurch gekennzeichnet,**
**dass** die Erhöhung und/oder Erniedrigung des Zählers um einen vorgegebenen festen, insbesondere ganzzahligen, Betrag erfolgt.

6. Verfahren nach Anspruch 4,
**dadurch gekennzeichnet,**
**dass** die Erhöhung und/oder Erniedrigung des Zählers um einen vorgegebenen, insbesondere ganzzahligen, Betrag erfolgt (14, 18, 22), dessen Größe von der Abweichung der ermittelten zeitlichen Änderung der Fahrzeugbeschleunigung von dem Schwellwert abhängig ist.

7. Verfahren nach Anspruch 4,
**dadurch gekennzeichnet,**
**dass** die Erhöhung und/oder Erniedrigung des Zählers proportional zur Abweichung der ermittelten zeitlichen Änderung der Fahrzeugbeschleunigung von dem Schwellwert ist.

8. Verfahren nach einem der Ansprüche 4 bis 7,
**dadurch gekennzeichnet,**
**dass** die Roll- oder Überschlagbewegung als kritisch eingestuft wird (34), wenn der Zähler einen vorbestimmten Zählerschwellwert überschreitet (30).

9. Verfahren nach Anspruch 3,
**dadurch gekennzeichnet,**
**dass** zusätzlich eine zweite zeitliche Änderung der Fahrzeugbeschleunigung aus zwei Beschleunigungswerten ermittelt wird, welche ein Zeitintervall T2 definieren, welches ein ganzzahliges Vielfaches der Periode T1 ist.

10. Verfahren nach Anspruch 9,
**dadurch gekennzeichnet,**
**dass** die Roll- oder Überschlagbewegung als kritisch eingestuft wird, wenn sowohl die zweite zeitliche Änderung der Fahrzeugbeschleunigung als auch jede innerhalb des Zeitintervalls T2 ermittelte erste zeitliche Änderung der Fahrzeugbeschleunigung jeweils einen vorbestimmten Schwellwert überschreitet.

11. Verfahren zum Aktivieren eines Fahrzeugsicherheitssystems, bei dem das Fahrzeugsicherheitssystem aktiviert wird, wenn eine nach einem Verfahren gemäß Anspruch 8 oder 10 detektierte Roll- oder Überschlagbewegung eines Kraftfahrzeugs als kritisch eingestuft wird.

12. Verfahren nach Anspruch 11,
**dadurch gekennzeichnet,**
**dass** das Fahrzeugsicherheitssystem nur dann aktiviert wird, wenn zusätzlich die Winkelposition, die Winkelgeschwindigkeit und/oder die Winkelbeschleunigung des Fahrzeugs bezüglich einer Fahrzeugachse oder mehrerer Fahrzeugachsen jeweils innerhalb eines vorbestimmten kritischen Bereiches liegen bzw. liegt.

13. Vorrichtung zur Beurteilung einer Roll- oder Überschlagbewegung eines Kraftfahrzeugs, insbesondere einer die Sicherheit von Fahrzeuginsassen beeinflussenden Roll- oder Überschlagbewegung, mit wenigstens einem Sensor zum Messen der Beschleunigung des Fahrzeugs in wenigstens einer linearen Richtung, insbesondere in Richtung einer Fahrzeugachse,
**gekennzeichnet durch**
eine mit dem Sensor verbundene Recheneinheit zur Ermittlung der zeitlichen Änderung der Fahrzeugbeschleunigung aus zwei gemessenen Beschleunigungswerten,
eine mit der Recheneinheit verbundene Komparatoreinheit zum Vergleichen der ermittelten zeitlichen Änderung der Fahrzeugbeschleunigung mit einem vorgegebenen Schwellwert, und
eine mit der Komparatoreinheit verbundene Auswerteeinheit zum Auswerten einer Abweichung der ermittelten zeitlichen Änderung der Fahrzeugbeschleunigung von dem Schwellwert.

## Claims

1. A method of evaluating rolling or roll-over a movement of a motor vehicle, in particular of a rolling or roll-over movement influencing the safety of the vehicle occupants, wherein the acceleration of the vehicle in at least one linear direction, in particular in the direction of a vehicle axis, is measured a plurality of times,
**characterized in that**
the time change of the vehicle acceleration in the at least one linear direction is determined; and
the determined time change of the vehicle acceleration in the at least one linear direction is taken into account in the evaluation of the rolling or roll-over movement.

2. A method in accordance with claim 1, **characterized in that** the time change of the vehicle acceleration is determined from two measured acceleration values.

3. A method in accordance with claim 1 or claim 2, **characterized in that** the time change of the vehicle acceleration is determined at least at times periodically with the period T1.

4. A method in accordance with claim 3, **characterized in that** a counter contributing to the evaluation of the rolling or roll-over movement is incremented (14, 18, 22) when the time change of the vehicle acceleration of a period T1 exceeds a threshold value (12, 16, 20) and/or the counter is reduced (24) when the time change of the vehicle acceleration of a period T1 falls below the threshold value (20).

5. A method in accordance with claim 4, **characterized in that** the incrementing and/or reducing of the counter take/takes place by a pre-determined fixed amount, in particular a whole-number amount.

6. A method in accordance with claim 4, **characterized in that** the incrementing and/or reducing of the counter take/takes place by a pre-determined amount (14, 18, 22), in particular a whole-number amount, whose magnitude is dependent on the difference of the determined time change of the vehicle acceleration from the threshold value.

7. A method in accordance with claim 4, **characterized in that** the incrementing and/or reducing of the counter is proportional to the deviation of the determined time change of the vehicle acceleration from the threshold value.

8. A method in accordance with any one of the claims 4 to 7, **characterized in that** the rolling or roll-over movement is classified as critical (34) when the counter exceeds a pre-determined threshold counter value (30).

9. A method in accordance with claim 3, **characterized in that** a second time change of the vehicle acceleration is additionally determined from two acceleration values which define a time interval T2 which is a whole-number multiple of the period T1.

10. A method in accordance with claim 9, **characterized in that** the rolling or roll-over movement is classified as critical when both the second time change of the vehicle acceleration and every first time change of the vehicle acceleration determined within the time interval T2 each exceed a pre-determined threshold value.

11. A method of activating a vehicle safety system in which the vehicle safety system is activated when a rolling or roll-over movement of a motor vehicle detected in accordance with a method in accordance with claim 8 or claim 10 is classified as critical.

12. A method in accordance with claim 11, **characterized in that** the vehicle safety system is only activated when the angular position, the angular speed and/or the angular acceleration of the vehicle with respect to a vehicle axis or to a plurality of vehicle axes additionally lies or lie within a pre-determined critical range.

13. An apparatus for the evaluation of a rolling or roll-over movement of a motor vehicle, in particular of a rolling or roll-over movement influencing the safety of vehicle occupants, comprising at least one sensor for the measurement of the acceleration of the vehicle in at least one linear direction, in particular in the direction of a vehicle axis;
**characterized by**
a calculation unit connected to the sensor for the determination of the time change of the vehicle acceleration from two measured acceleration values;
a comparator unit connected to the calculation unit for the comparison of the determined time change of the vehicle acceleration with a pre-determined threshold value; and
an evaluation unit connected to the comparator unit for the evaluation of a difference of the determined time change of the vehicle acceleration from the threshold value.

## Revendications

1. Procédé d'appréciation d'un mouvement de roulis ou de retournement d'un véhicule automobile, en particulier un mouvement de roulis ou de retournement influençant la sécurité des passagers du véhicule, dans lequel l'accélération du véhicule est mesurée plusieurs fois au moins dans une direction linéaire, en particulier dans la direction d'un axe du véhicule,
**caractérisé en ce que**
la variation dans le temps de l'accélération du véhicule est déterminée dans la au moins une direction linéaire, et
la variation dans le temps déterminée de l'accélération du véhicule dans la au moins une direction linéaire est prise en compte pour l'appréciation du mouvement de roulis ou de retournement.

2. Procédé selon la revendication 1,
**caractérisé**
**en ce que** la variation dans le temps de l'accélération du véhicule est déterminée à partir de deux valeurs d'accélération mesurées.

3. Procédé selon la revendication 1 ou 2,
**caractérisé**
**en ce que** la variation dans le temps de l'accélération du véhicule est déterminée au moins périodiquement dans le temps avec la période T1.

4. Procédé selon la revendication 3,
**caractérisé**
**en ce qu'**un compteur, contribuant à apprécier le mouvement de roulis ou de retournement, est augmenté (14, 18, 22), lorsque la variation dans le temps de l'accélération du véhicule d'une période T1 dépasse (12, 16, 20) une valeur de seuil, et/ou le compteur est diminué (24), lorsque la variation dans le temps de l'accélération du véhicule d'une période T1 dépasse par dessous (20) la valeur de seuil.

5. Procédé selon la revendication 4,
**caractérisé**
**en ce que** l'augmentation et/ou la diminution du compteur est égal à une valeur absolue fixe prédéfinie, en particulier à un nombre entier.

6. Procédé selon la revendication 4,
**caractérisé**
**en ce que** l'augmentation et/ou la diminution du compteur est égal à une valeur absolue prédéfinie, en particulier à un nombre entier (14, 18, 22) dont la grandeur dépend de l'écart entre la variation temporelle déterminée de l'accélération du véhicule et la valeur de seuil.

7. Procédé selon la revendication 4,
**caractérisé**
**en ce que** l'augmentation et/ou la diminution du compteur est proportionnel à l'écart entre la variation temporelle déterminée de l'accélération du véhicule et la valeur de seuil.

8. Procédé selon l'une des revendications 4 à 7,
**caractérisé**
**en ce que** le mouvement de roulis ou de retournement est classé critique (34) lorsque le compteur dépasse (30) une valeur de seuil de compteur prédéterminée.

9. Procédé selon la revendication 3,
**caractérisé**
**en ce qu'**il est déterminé en outre une seconde variation temporelle de l'accélération du véhicule, à partir de deux valeurs d'accélération qui définissent un intervalle de temps T2, lequel est un multiple entier de la période T1.

10. Procédé selon la revendication 9,
**caractérisé**
**en ce que** le mouvement de roulis ou de retournement est classé critique lorsque la seconde variation temporelle de l'accélération du véhicule ainsi que chaque première variation temporelle de l'accélération du véhicule, déterminée à l'intérieur de l'intervalle de temps T2, dépasse dans chaque cas une valeur de seuil prédéterminée.

11. Procédé d'activation d'un système de sécurité de véhicule dans lequel le système de sécurité de véhicule est activé lorsqu'un mouvement de roulis ou de retournement d'un véhicule automobile, détecté d'après un procédé selon la revendication 8 ou 10, est classé critique.

12. Procédé selon la revendication 11,
**caractérisé**
**en ce que** le système de sécurité du véhicule n'est activé que si en outre la position angulaire, la vitesse angulaire et/ou l'accélération angulaire du véhicule par rapport à un axe ou à plusieurs axes du véhicule, se situent ou se situe chaque fois à l'intérieur d'un domaine critique prédéterminé.

13. Dispositif d'appréciation d'un mouvement de roulis ou de retournement d'un véhicule automobile, en particulier d'un mouvement de roulis ou de retournement influençant la sécurité de passagers de véhicule, comportant au moins un capteur pour mesurer l'accélération du véhicule dans au moins une direction linéaire, en particulier dans la direction d'un axe du véhicule,
**caractérisé par**
une unité de calcul connectée au capteur pour déterminer la variation dans le temps de l'accélération du véhicule à partir de deux valeurs d'accélération mesurées,
une unité de comparaison connectée à l'unité de calcul, pour comparer la variation dans le temps déterminée de l'accélération du véhicule à une valeur de seuil prédéfinie, et
une unité d'évaluation, connectée à l'unité de comparaison, pour évaluer un écart entre la variation temporelle déterminée de l'accélération du véhicule et la valeur de seuil.
